# EUROPÄISCHE PATENTANMELDUNG

(11) **EP 4 052 859 A1**
(43) Veröffentlichungstag der Anmeldung: **07.09.2022**
(21) Anmeldenummer: 21161017.5
(22) Anmeldetag: 05.03.2021
(51) Int. Cl.: B25J 9/00, G05B 19/418, G01D 5/347

(54) **FÖRDER- UND MONTAGEVORRICHTUNG FÜR KRAFTFAHRZEUGE**

(71) Anmelder: AyTec Automation GmbH, 93098 Mintraching (DE)
(72) Erfinder: Schmula, Sebastian, 93098 Mintraching (DE); Ruhland, Christian, 93098 Mintraching (DE)
(74) Vertreter: Glück Kritzenberger Patentanwälte PartGmbB

(57) **Zusammenfassung**

Die Erfindung betrifft eine Förder- und Montagevorrichtung (10) für Kraftfahrzeuge, umfassend eine Fördereinrichtung (12) mit wenigstens einem bewegten Förderträger (16), der ausgebildet ist, ein Kraftfahrzeug oder einen Teil eine Kraftfahrzeugs mit einer vorgegebenen Geschwindigkeit in der Fördereinrichtung (12) zu transportieren, und eine Montageeinrichtung (22), die mit dem Förderträger (16) bewegbare Montageeinheit (24) zum Tragen einer Bearbeitungseinrichtung (26) für das Kraftfahrzeug/teil und eine Führungseinrichtung (20) und Antriebseinrichtung (36) für die Montageeinheit (24) aufweist, um diese in Synchronisation mit dem Förderträger (16) zu bewegen und zu positionieren. Gemäß der Erfindung ist in Verbindung mit dem Förderträger (16) ein länglicher optischer Datenträger (30) angeordnet, dessen Längsrichtung sich in Bewegungsrichtung der Fördereinrichtung (12) erstreckt. Der Datenträger (30) weist wenigstens eine absolute Positionsangabe auf, und die Montageeinrichtung (22) weist eine Steuerung (34) für die Antriebseinrichtung (36) und eine mit der Steuerung (34) verbundene optische Lesevorrichtung (32) auf, die ausgebildet ist, den auf dem Förderträger (16) angeordneten Datenträger (30) zu lesen. Die Steuerung (34) ist ausgebildet, um die Antriebseinrichtung (36) in Abhängigkeit von den gelesenen Daten anzusteuern.

## Beschreibung

### Technisches Gebiet

Bei der Montage von Kraftfahrzeugen werden Kraftfahrzeugteile, wie zum Beispiel das Chassis oder andere Teile davon, auf einer Fördereinrichtung mittels eines von der Fördereinrichtung bewegten Förderträgers transportiert. Um an dem Kraftfahrzeugteil eine Bearbeitung vorzunehmen, ist eine Montagevorrichtung erforderlich mit einer Montageeinheit, die in Synchronisation mit dem Förderträger bewegbar ist, um somit quasi im Stillstand relativ zu dem bewegten Teil arbeiten zu können. Derartige Arbeiten können Schraubarbeiten, Schweißarbeiten oder dergleichen sein. Bislang wird die Synchronisation der Bewegung der Montageeinheit mit dem Förderträger durch einen Datenabgleich der vorliegenden Bewegungsdaten des Förderträgers mit dem Antrieb der Montageeinrichtung bewerkstelligt, oder es werden mechanische Mitnehmersysteme verwendet, die die Montageeinheit über die Bearbeitungsstrecke an dem Förderträger einklinken, womit auch in diesem Fall die Montageeinheit relativ zum Förderträger stillsteht und eine Bearbeitung möglich ist.

Diese Verfahren sind vergleichsweise aufwendig, wobei der Aufwand in einem Fall datentechnischer Natur ist und im anderen Fall in der Gesamtkonstruktion begründet ist.

### Beschreibung der Erfindung

Es ist daher Aufgabe der vorliegenden Erfindung, eine Förder- und Montagevorrichtung zu schaffen, bei der die Synchronisation der Bewegung zwischen dem Förderträger und der Montageeinheit leichter realisiert wird.

Diese Aufgabe wird durch eine Förder- und Montagevorrichtung mit den Merkmalen des Anspruchs 1 realisiert. Vorteilhafte Ausführungsformen der Erfindung sind in den abhängigen Ansprüchen, in der Beschreibung und der Zeichnung offenbart.

Die erfindungsgemäße Förder- und Montagevorrichtung für Kraftfahrzeuge oder Kraftfahrzeugteile enthält eine Fördereinrichtung mit wenigstens einem bewegten Förderträger, der ausgebildet ist, ein Kraftfahrzeug oder ein Teil des Kraftfahrzeugs mit einer vorgegebenen Geschwindigkeit zu transportieren. Des Weiteren enthält die Förder- und Montagevorrichtung eine Montageeinrichtung, die eine mit dem Förderträger, d.h. zumindest partiell in gleicher Richtung wie der Förderträger, bewegbare Montageeinheit zum Tragen einer Bearbeitungseinrichtung für das Kraftfahrzeugteil als auch eine Führungseinrichtung und Antriebseinrichtung für die Montageeinheit aufweist. Die Bearbeitungseinrichtung kann beispielsweise eine Schraubvorrichtung und/oder eine Schweißvorrichtung oder dergleichen sein oder beinhalten. Mit Hilfe dieser Führungseinrichtung und Antriebseinrichtung wird die Montageeinheit in Synchronisation mit dem Förderträger bewegt und positioniert.

Gemäß der Erfindung ist in Verbindung mit dem Förderträger ein länglicher optischer Datenträger angeordnet, dessen Längsrichtung sich in Bewegungsrichtung der Fördereinrichtung erstreckt. Der Datenträger weist wenigstens eine absolute Positionsangabe auf, das heißt eine Angabe, die eine definierte Position des Förderträgers oder des darauf transportierten Kraftfahrzeugs/teils kennzeichnet. Der Datenträger kann als separater Streifen auf dem Förderträger angebracht werden, oder die Daten wie z.B. Strichcodes oder Bilddaten werden direkt auf den Förderträger, z.B. auf seine Seitenwand aufgebracht, in welchem Fall der Förderträger selbst den Datenträger bildet. Der Datenträger kann alternativ auch auf dem transportierten Kraftfahrzeug/teil aufgebracht werden, da ja letztlich die Bearbeitung durch die Bearbeitungseinrichtung am Kraftfahrzeug/teil erfolgt.

Die Montageeinrichtung hat des Weiteren eine Steuerung für die Antriebseinrichtung der Montageeinheit und eine mit der Steuerung verbundene optische Lesevorrichtung, welche in der Lage ist, den in Verbindung mit dem Förderträger angeordneten Datenträger zu lesen. Die Steuerung ist ausgebildet, die Antriebseinrichtung in Abhängigkeit von den durch die optische Lesevorrichtung gelesenen Daten anzusteuern. Aufgrund der wenigstens einen absoluten Positionsangabe auf dem Datenträger weiß somit die Antriebseinrichtung, an welcher Position sich die Montageeinheit relativ zum Förderträger befindet und ist entsprechend in der Lage, die Antriebseinrichtung derart zu betätigen, dass die Montageeinheit in die korrekte vorgegebene Position relativ zum Förderträger positioniert und anschließend in Synchronisation mit dem Förderträger bewegt wird. Vorzugsweise ist während des gesamten Bearbeitungsvorgangs die optische Lesevorrichtung aktiv und ermöglicht es daher der Steuerung die korrekte Position der Montageeinheit relativ zum Förderträger während des gesamten Bearbeitungsvorgangs der Bearbeitungseinrichtung sicherzustellen.

Die Erfindung ermöglicht somit eine sehr exakte Positionierung und Synchronisierung der Bewegung der Montageeinheit relativ zum Förderträger mit einem sehr geringen Aufwand. Es sind keine aufwendigen datentechnischen Transaktionen erforderlich, die zudem die gesamte Vorrichtung softwaremäßig verkomplizieren und anfälliger können, und andererseits sind keine mechanischen Mitnehmersystem notwendig, um die Montageeinheit mit dem Förderträger mitzuführen, zumal derartige mechanische Systeme auch wartungs- und reparaturanfällig sind.

Die Erfindung bietet somit eine sowohl mechanisch als auch softwaretechnisch sehr einfach zu realisierende Lösung zur Synchronisierung und Positionierung der der Montageeinheit relativ zum Förderträger der Fördereinrichtung.

Vorzugsweise ist der Datenträger auf einer Seitenfläche des Förderträgers befestigt und ist somit von der Lesevorrichtung leicht auszulesen.

Der Datenträger erstreckt sich in Förderrichtung vorzugsweise über eine Länge von wenigstens 30 cm, wenigstens 1 m, insbesondere über wenigstens 2 m, womit die optische Lesevorrichtung in der Lage ist, den Datenträger bereits eine gute Entfernung vor und hinter der korrekten Position auszulesen, was es wiederum der Steuerung ermöglicht, die Montageeinheit frühzeitig und damit ohne große Beschleunigung der Montageeinheit zu positionieren beziehungsweise zu synchronisieren.

Vorzugsweise ist der Datenträger als ein Strichcodedatenträger oder als ein Bilddatenträger ausgebildet, so dass die Lesevorrichtung in der Lage ist, aus den Strichcodedaten oder den Bilddaten sofort die entsprechende aktuelle Position des Förderträgers an der entsprechenden Stelle des Bildes oder des Strichcodes zu erhalten.

In einer vorteilhaften Ausführungsform der Erfindung enthält der Datenträger eine Abfolge absoluter Positionsdaten. Damit ist jeder Punkt des Datenträgers geeignet, sofortige Informationen über die absolute Position der Montageeinheit relativ zum Förderträger bzw. dem darauf transportierten Kraftfahrzeug/teil zu vermitteln. Alternativ kann der Datenträger mindestens eine absolute Positionsangabe und zusätzlich relative Positionsangaben aufweisen, zum Beispiel eine absolute Positionsangabe am Anfang und am Ende und eventuell in der Mitte des Datenträgers und dazwischen schlichtweg eine metrische Skala, so dass die Lesevorrichtung beim Überfahren einer absoluten Positionsangabe und aufgrund der Anzahl der nachfolgenden relativen Positionsangaben in der Lage ist, die absolute Position an jeder Stelle des Datenträgers zu errechnen. Auch dies ist mit einem äußerst geringen Aufwand möglich.

Vorzugsweise hat der Förderträger eine Aufnahme für das Kraftfahrzeug/teil, die eine exakte Positionierung des Kraftfahrzeugs/teils relativ zum Förderträger ermöglicht, so dass eine exakte Positionierung der Montageeinheit relativ zum Förderträger auch gleichbedeutend ist mit einer exakten Positionierung relativ zum Kraftfahrzeug/teil.

In einer vorteilhaften Weiterbildung der Erfindung ist die Lesevorrichtung als eine Laserlesevorrichtung ausgebildet. Dies hat den Vorteil, dass ein kohärenter und durch Umwelteinflüsse wenig beeinflusster Lesestrahl bereitgestellt wird, der eine entsprechend zuverlässige Positionsübermittlung zur Steuerung der Montageeinrichtung beziehungsweise ihrer Antriebseinrichtung ermöglicht.

In vorteilhafter Weise ist die Montageeinheit ein Montageschlitten, der über Führungsrollen an wenigstens einer Führungsstrebe geführt ist, die sich parallel zu der Förderstrecke der Fördereinrichtung erstreckt. Eine derartige Führungseinrichtung für die Montageeinrichtung ist technisch einfach zu realisieren.

Vorzugsweise ist mit der Montageeinheit wenigstens ein Elektromotor verbunden, der über wenigstens eine der Führungsrollen und/oder über ein separates Antriebsrad mit der wenigstens einen Führungsstrebe in Wechselwirkung tritt. In diesem Fall bildet die Führungseinrichtung auch einen Teil der Antriebseinrichtung, was die Anzahl der zu installierenden Komponenten der Montageeinrichtung minimiert. Der Elektromotor kann beispielsweise ein Schrittmotor sein oder ein anderer Elektromotor, der sehr exakt ansteuerbar ist, um eine exakte Synchronisierung mit dem bewegten Förderträger zu erreichen.

Die Bearbeitungseinrichtung ist, wie oben aufgeführt, eine Werkzeugmaschine, wie zum Beispiel ein Schrauber, eine Falzvorrichtung, ein Schweißgerät oder dergleichen. Die Bearbeitungseinrichtung kann auch einfach ein Werkzeugträger sein, der dem Förderträger ein weiteres Teil des Kraftfahrzeugs zuführt, um dieses dann korrekt in Relation zu dem mit dem Förderträger bewegten Kraftfahrzeugteil zu positionieren, um diese gegebenenfalls miteinander montieren zu können.

In einer vorteilhaften Ausführungsform der Erfindung weist die Antriebseinrichtung einen Elektromotor und einen Frequenzwandler zur Ansteuerung des Elektromotors auf. Die Steuerung des Frequenzwandlers ist ausgebildet, um den Elektromotor in Abhängigkeit von der über die Lesevorrichtung eingelesenen Signale zu steuern. Eine derartige Steuerung ist technisch einfach zu realisieren und andererseits sehr genau, um eine exakte Positionierung und Mitführung der Montageeinheit relativ zum Führungsträger zu erzielen.

Die Erfindung betrifft weiterhin ein Verfahren zum Positionieren einer Montageeinrichtung relativ zu einem bewegten Förderträger einer Fördereinrichtung für Kraftfahrzeuge oder Kraftfahrzeugteile. In dem Verfahren wird der Förderträger mit einem länglichen Datenträger versehen, der sich in Bewegungsrichtung der Fördereinrichtung erstreckt. Die Montageeinrichtung hat eine bewegte Montageeinheit, die mittels einer Führungseinrichtung und einer Antriebseinrichtung synchron zum Förderträger bewegt und positioniert werden kann. Eine Steuerung der Antriebseinrichtung wird in Abhängigkeit von den Detektionssignalen einer an der Montageeinheit angeordneten optischen Lesevorrichtung angesteuert, welche den an dem Förderträger angeordneten Datenträger ausliest. Aufgrund dieses Verfahrens kann eine exakte Positionierung und Synchronisierung der Montageeinheit relativ zum Förderträger erfolgen.

Vorzugsweise wird der Lesevorgang und die Steuerung der Antriebseinrichtung während des gesamten Bearbeitungsvorgangs durchgeführt, der mit der Bearbeitungseinrichtung der Montageeinrichtung an dem mit dem Förderträger bewegten Kraftfahrzeugteil durchzuführen ist, zum Beispiel ein Schraubvorgang, ein Schweißvorgang, Falzvorgang oder einfach das Anordnen und Positionieren eines weiteren Kraftfahrzeugteils relativ zu dem mit dem Förderträger bewegten Kraftfahrzeugteil.

Es ist für den Fachmann offensichtlich, dass die oben beschriebenen Ausführungsformen der Vorrichtung als auch des Verfahrens in beliebiger Weise miteinander kombiniert werden können.

Folgende Ausdrücke werden synonym verwendet: Fördereinrichtung - Transporteinrichtung; Kraftfahrzeug - Kraftfahrzeugchassis - Kraftfahrzeugteil;

### Kurze Beschreibung der Zeichnungen

Die Erfindung wird nachfolgend beispielsweise anhand der schematischen Zeichnung beschrieben. In dieser zeigen:

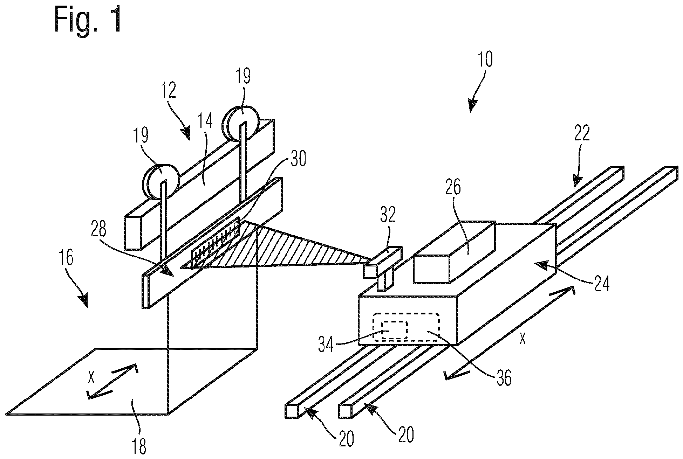

- Fig. 1: eine schematische Ansicht einer Fördereinrichtung mit einem Förderträger und einer Montageeinrichtung mit einer Montageeinheit, die über Führungsrollen an einer Führungsstrebe parallel zur Fördereinrichtung bewegbar angeordnet ist.

### Wege zur Ausführung der Erfindung

Fig. 1 zeigt eine Förder- und Montagevorrichtung 10 für Kraftfahrzeuge, die eine Fördereinrichtung 12 aufweist, welche eine Führungsstrebe 14 aufweist, an der ein Förderträger 16 mit einer Transportplattform 18 zur Aufnahme eines Kraftfahrzeugs oder eines Kraftfahrzeugteils oder dergleichen mittels Führungsrollen 19 in Förderrichtung X verfahrbar angeordnet ist. Parallel zu der Führungsstrebe 14 der Fördereinrichtung 12 erstrecken sich Führungsschienen 20 einer Montageeinrichtung 22, auf welcher eine Montageeinheit 24 der Montageeinrichtung 22 ebenfalls in Förderrichtung X verfahrbar ist. Die Montageeinheit 24 trägt eine Bearbeitungseinrichtung 26, wie zum Beispiel einen Schrauber, ein Schweißgerät, ein Laserbearbeitungsgerät, eine Falzmaschine oder dergleichen, um Arbeiten an dem auf dem Transportplattform 18 des Förderträgers 16 befindlichen Kraftfahrzeugteil, zum Beispiel am Kraftfahrzeugchassis, durchführen zu können. Hierfür soll die Bewegung der Montageeinheit 24 nicht nur zur Bewegung des Förderträgers 16 synchronisiert werden, sondern die Montageeinheit 24 muss in ihrer Position relativ zum Förderträger in Förderrichtung X exakt positioniert werden, so dass zum Beispiel eine durch den Schrauber 26 einzudrehende Schraube an dem Kraftfahrzeugteil exakt positioniert wird. Die relative Positionierung sollte daher vorzugsweise auf den Millimeter genau sein. Zu diesem Zwecke ist an einer Seitenwand 28 des Förderträgers 16 ein länglicher Datenträger 30 angeordnet, der wenigstens eine absolute Positionsmarkierung und zugehörige relative Positionsmarkierungen, zum Beispiel im Millimeterabstand oder mehrere hintereinander in X-Richtung positionierte absolute Positionsmarkierungen, aufweist. Die Seitenwand 28 kann natürlich auch selber den Datenträger 30 bilden, wenn die entsprechenden Positionsangaben beziehungsweise Positionsdaten direkt auf die Seitenwand 28 des Förderträgers aufgebracht sind.

An der Montageeinheit 24 ist eine optische Lesevorrichtung 32, insbesondere eine Laserlesevorrichtung, angeordnet, die den Datenträger 30 abscannt und die darauf befindlichen Positionsdaten einer Steuerung 34 der Antriebseinrichtung 36 der Montageeinheit 24 zuleitet, die dann die Antriebseinrichtung 36 entsprechend der ausgelesenen Positionsangabe derart ansteuert, dass die Montageeinheit 24 an der gewünschten Stelle relativ zum Förderträger 16 positioniert wird und in dieser Position synchron mitläuft.

Anstelle der Anbringung auf dem Förderträger 16 ist es auch möglich, den Datenträger direkt auf dem Kraftfahrzeugteil aufzubringen.

Der Datenträger selber kann zum Beispiel eine durch einen Strichcode oder ein Bild verschlüsselte absolute Positionsangabe enthalten und an einer oder beiden Seiten davon sich in X-Richtung erstreckende relative Positionsangaben, zum Beispiel Striche im Millimeterabstand. Alternativ können auch mehrere absolute Positionsangaben auf dem Datenträger 30 in Förderrichtung X hintereinander angeordnet sein, zum Beispiel in Form von Strichcodes oder in Form von Bildinformationen, was es der optischen Lesevorrichtung 32 ermöglicht, die absolute Position relativ zum Förderträger an jeder Stelle des Datenträgers zu erhalten.

Die Erfindung ist nicht auf das oben beschriebene Ausführungsbeispiel begrenzt, sondern kann innerhalb des Schutzbereichs der nachfolgenden Ansprüche variiert werden.

### Bezugszeichenliste

- 10: Förder- und Montagevorrichtung
- 12: Fördereinrichtung - Transporteinrichtung für Kraftfahrzeuge/teile
- 14: Führungsstrebe der Fördereinrichtung
- 16: Förderträger der Fördereinrichtung
- 18: Transportplattform des Förderträgers
- 19: Führungsrollen der Fördereinrichtung
- 20: Führungseinrichtung - Führungsschienen der Montageeinrichtung
- 22: Montageeinrichtung
- 24: Bewegbare Montageeinheit der Montageeinrichtung
- 26: Bearbeitungseinrichtung - Schrauber - Schweißgerät - Teileapplikator etc.
- 28: Seitenwand des Förderträgers
- 30: auf der Seitenwand angebrachter länglicher Datenträger
- 32: Lesevorrichtung der Montageeinheit
- 34: Steuerung der Antriebseinrichtung
- 36: Antriebseinrichtung

## Patentansprüche

1. Förder- und Montagevorrichtung (10) für Kraftfahrzeuge, umfassend eine Fördereinrichtung (12) mit wenigstens einem bewegten Förderträger (16), der ausgebildet ist, ein Kraftfahrzeug oder einen Teil eine Kraftfahrzeugs mit einer vorgegebenen Geschwindigkeit in der Fördereinrichtung (12) zu transportieren, und eine Montageeinrichtung (22), die eine mit dem Förderträger (16) bewegbare Montageeinheit (24) zum Tragen einer Bearbeitungseinrichtung (26) für das Kraftfahrzeug/teil und eine Führungseinrichtung (20) und Antriebseinrichtung (36) für die Montageeinheit (24) aufweist, um diese in Synchronisation mit dem Förderträger (16) zu bewegen und zu positionieren,
**dadurch gekennzeichnet, dass** in Verbindung mit dem Förderträger (16) ein länglicher optischer Datenträger (30) angeordnet ist, dessen Längsrichtung sich in Bewegungsrichtung der Fördereinrichtung (12) erstreckt, welcher Datenträger (30) wenigstens eine absolute Positionsangabe aufweist, und dass die Montageeinrichtung (22) eine Steuerung (34) für die Antriebseinrichtung (36) und eine mit der Steuerung (34) verbundene optische Lesevorrichtung (32) aufweist, die ausgebildet ist, den auf dem Förderträger (16) angeordneten Datenträger (30) zu lesen, und dass die Steuerung (34) ausgebildet ist, um die Antriebseinrichtung (36) in Abhängigkeit von den gelesenen Daten anzusteuern.

2. Vorrichtung (10) nach Anspruch 1, **dadurch gekennzeichnet, dass** der Datenträger (30) auf einer Seitenwand (28) des Förderträgers (16) befestigt ist oder durch die Seitenwand (28) des Förderträgers (16) gebildet ist.

3. Vorrichtung (10) nach Anspruch 1 oder 2, **dadurch gekennzeichnet, dass** sich der Datenträger (30) in Förderrichtung über eine Länge von wenigstens 30 cm, vorzugsweise wenigstens 1 m, insbesondere über wenigstens 2 m erstreckt.

4. Vorrichtung (10) nach Anspruch 1 oder 2, **dadurch gekennzeichnet, dass** der Datenträger (30) als ein Strichcodedatenträger oder als ein Bilddatenträger ausgebildet ist.

5. Vorrichtung (10) nach einem der vorhergehenden Ansprüche, **dadurch gekennzeichnet, dass** der Datenträger (30) eine Abfolge absoluter Positionsdaten aufweist.

6. Vorrichtung (10) nach einem der Ansprüche 1 bis 4, **dadurch gekennzeichnet, dass** der Datenträger (30) mindestens eine absolute Positionsangabe und relative Positionsdaten aufweist.

7. Vorrichtung (10) nach einem der vorhergehenden Ansprüche, **dadurch gekennzeichnet, dass** die Lesevorrichtung (32) eine Laserlesevorrichtung ist.

8. Vorrichtung (10) nach einem der vorhergehenden Ansprüche, **dadurch gekennzeichnet, dass** die Montageeinheit (24) ein Montageschlitten ist, der über Führungsrollen an wenigstens einer Führungsschiene (20) geführt ist.

9. Vorrichtung (10) nach Anspruch 8, **dadurch gekennzeichnet, dass** mit der Montageeinheit (24) ein Elektromotor verbunden ist, der über wenigstens eine der Führungsrollen oder über ein separates Antriebsrad mit der Führungsschiene (20) in Wechselwirkung tritt.

10. Vorrichtung (10) nach einem der vorhergehenden Ansprüche, **dadurch gekennzeichnet, dass** die Bearbeitungseinrichtung (26) eine Werkzeugmaschine, wie z.B. einen Schrauber umfasst.

11. Vorrichtung (10) nach einem der vorhergehenden Ansprüche, **dadurch gekennzeichnet, dass** die Antriebseinrichtung (36) einen Elektromotor und einen Frequenzwandler zur Ansteuerung des Elektromotors aufweist, und dass die Steuerung (34) des Frequenzwandlers ausgebildet ist, den Elektromotor in Abhängigkeit von der über die Lesevorrichtung (32) eingelesenen Signalen zu steuern.

12. Verfahren zum Positionieren einer Montageeinrichtung (22) relativ zu einem bewegten Förderträger (16) einer Fördereinrichtung (12) für Kraftfahrzeuge oder Kraftfahrzeugteile, in welchem Verfahren der Förderträger (16) mit einem länglichen Datenträger (30) versehen wird, der sich in Bewegungsrichtung der Fördereinrichtung (12) erstreckt, wobei die Montageeinrichtung (22) eine bewegte Montageeinheit (24) aufweist, die mittels einer Führungseinrichtung (20) und Antriebseinrichtung (36) synchron zum Förderträger (16) bewegt und positioniert wird, wobei eine Steuerung (34) der Antriebseinrichtung (36) in Abhängigkeit von den Detektionssignalen einer an der Montageeinheit (24) angeordneten optischen Lesevorrichtung (32) angesteuert wird, welche den an dem Förderträger (16) angeordneten Datenträger (30) ausliest.
